# EUROPÄISCHE PATENTSCHRIFT

(11) **EP 0 974 388 B1**
(45) Veröffentlichungstag und Bekanntmachung des Hinweises auf die Patenterteilung: **22.08.2001**
(21) Anmeldenummer: 98110246.0
(22) Anmeldetag: 05.06.1998
(51) Int. Cl.: B01D 53/00, B01D 53/70, B01D 53/02, B01D 53/04

(54) **Verfahren zum Reinigen von Gasen**
Process for purifying gases
Procédé pour purifier des gaz

(43) Veröffentlichungstag der Anmeldung: 26.01.2000
(73) Patentinhaber: Bonnenberg + Drescher Ingenieurgesellschaft mbH, 52457 Aldenhoven (DE)
(72) Erfinder: Drescher, Hans Paul, Dr., 52428 Jülich (DE); Weiler, Markus, 50226 Frechen (DE)
(74) Vertreter: von Creytz, Dietrich, Dipl.-Phys.

(56) Entgegenhaltungen:
- EP-A- 0 490 202
- EP-A- 0 574 705
- EP-A- 0 674 935
- DE-A- 19 515 075

## Beschreibung

Die Erfindung betrifft ein Verfahren zum Reinigen von Gasen aus industriellen Prozessen, wie Rauchgas aus Verbrennungsanlagen oder Kraftwerken, insbesondere zum Abscheiden von Dioxin, mit einem Aktivkohle bzw. -koks als Filtermaterial in einer Filterzelle enthaltenden Festbettfilter, wobei das Festbettfilter in feuchtem Zustand betrieben wird. Sie betrifft ferner eine Vorrichtung zum Durchführen des Verfahrens.

Herkömmliche Aktivkoks- oder -kohle-Festbettfilter werden bei Temperaturen von 120 bis 160 °C, also mit ausreichendem Sicherheitsabstand oberhalb des Taupunkts betrieben. Grund hierfür ist die bekannte Tatsache, daß Stäube im Abgas in Verbrennungs- und Feuerungsanlagen in Kontakt mit Feuchtigkeit dazu neigen, zementähnlich zu verkleben. In einem Abgasfilter können diese Stäube zu Verkrustungen und Verstopfungen führen, die sich nicht oder nur sehr schwer wieder beseitigen lassen.

Die Verkrustungen und Verstopfungen lassen sich herkömmlich nur vermeiden, wenn bei Temperaturen deutlich oberhalb des Taupunkts der zu reinigenden Gase gearbeitet wird. Das hat erhebliche Kosten- und Sicherheitsnachteile. Die Absorptionskapazität des Filtermaterials ist bei den hohen Temperaturen vermindert. Wenn das zu reinigende Gas vorher durch einen Wäscher geleitet war, muß es zur Trocknung wieder aufgeheizt werden. in einem trockenen Festbettfilter mit Aktivkohle bzw. -koks, vorzugsweise in gekörnter Form, können hot spots mit mehreren 100 °C auftreten. Dieser Problematik kann in der bisherigen Praxis dadurch begegnet werden, daß die Anlage immer mit mindestens 40 % des Nenndurchsatzes betrieben wird. Unterhalb dieses Mindestdurchsatzes oder bei Stillständen muß das System abgesperrt und, z.B. mit Stickstoff, inertisiert werden. Die Sicherheitstechnik erfordert eine aufwendige hot spot Detektion (Delta CO-Messung).

In EP 0 674 935 A wird ein Aktivkohle-Filter zum Abscheiden von Schadstoffen, z.B. Dioxin und Furan, aus Rauchgasen beschrieben. Nach dem dort angegebenen Stand der Technik wird zur Absorption der Schadstoffe Aktivkohle mit einem Volumenanteil von 20 bis 40 % Wasser in einem Filtergefäß gemischt. Die zu reinigenden Rauchgase werden in Form von Bläschenketten durch das Aktivkohle-Wasser-Gemisch geleitet. Bei diesem Verfahren soll vermieden werden, daß das im Filtergefäß befindliche Filtermedium während des Filtervorgangs gänzlich in einem Wasserbad getaucht ist. Um das zu erreichen, werden im Bekannten mit Wasser besprühte Filterkästen vorgesehen, deren Wände gas- und wasserdurchlässig sind. Die zu reinigenden Rauchgase durchströmen die Filterkästen von unten nach oben. In großtechnischem Maßstab ist diese Verfahrensweise nicht einsetzbar, da die Filterkästen praktisch nicht handhabbar sind.

Der Erfindung liegt die Aufgabe zugrunde, den Energieaufwand zum Aufheizen der zu reinigenden Gase zu vermindern, die Sicherheit, insbesondere gegenüber hot spots, zu verbessern und zugleich das Adsorptionsverhalten des Filtermaterials zu verbessern, ohne daß die Gefahr einer Verkrustung oder Verstopfung der Filterzelle in Kauf zu nehmen wäre.

Die erfindungsgemäße Lösung besteht für das eingangs genannte Verfahren darin, daß die Gase vor dem Einleiten in das Filter durch einen Naßwäscher geführt werden, so daß in den zu reinigenden Gasen enthaltene Stäube mit Zementierungseigenschaft durch Berührung mit Wasser ausreagiert werden, und daß die Gase, ohne über den Taupunkt erhitzt zu sein, durch das Festbettfilter geleitet werden. Einige Verbesserungen und weitere Ausgestaltungen der Erfindung werden in den Unteransprüchen beschrieben.

Der Erfindung des "nassen" Aktivkoksfilters bzw. Aktivkohlefilters liegt die aus theoretischen Überlegungen und verschiedenen Versuchsreihen gewonnene Erkenntnis zugrunde, daß Stäube im Rauchgas von Verbrennungs- und Feuerungsanlagen bei einer bestimmten Schaltung der gesamten Rauchgasreinigungsanlage, insbesondere bei vorgeschalteten leistungsfähigen Naßwäschen, bereits ausreagiert sind und somit nicht mehr zum Zementieren neigen. Es schadet also für die Wirkungsweise des erfindungsgemäßen Verfahrens nicht, wenn die durch Berührung mit Wasser vor dem Einleiten in das Filter bereits ausreagierten Stäube in das Filter gelangen. Sie werden dort in der Regel gesammelt, ohne - etwa wie abgebundener Zementnoch in der Lage zu sein, das Filtermaterial zu verkrusten. Erfindungsgemäß wird daher ein nasses Aktivkoksfilter bzw. Aktivkohlefilter gezielt in feuchtem Zustand, das heißt in der Nähe des Taupunkts, betrieben und dazu verwendet, Rauchgas, welches eine Naßwäsche bereits passiert hat, so naß und kalt, wie es ist, - insbesondere zum Abtrennen eines Dioxingehaltes - zu reinigen. Die Funktionsfähigkeit des erfindungsgemäßen Filters wird auch nicht durch Besprühen oder sogar Fluten mit Wasser, wenn das Wasser wieder abgelassen wird, beeinträchtigt.

Durch die Erfindung wird erreicht, daß Gase aus industriellen Prozessen, ohne über den Taupunkt für Wasser erhitzt zu sein, zum Abscheiden von Dioxin oder dergleichen Giften, durch ein Aktivkohle oder Aktivkoks enthaltendes Festbettfilter geleitet werden können und dabei weitestgehend von ihrer Schadstoffracht befreit werden, ohne daß die Gefahr einer Verkrustung oder Verklebung des geschütteten, körnigen Filtermaterials besteht. Dadurch läßt sich verbrauchtes Filtermaterial unter Aufrechterhaltung des jeweils vorgeschalteten Prozesses aus dem Filter entfernen.

Das Ausscheiden des verbrauchten Filtermaterials erfolgt vorzugsweise durch Ausschlämmen mit Wasser, in dem der auszuscheidende Teil des Filtermaterials, im Bodenbereich der jeweiligen Filterzelle, mit Wasser geflutet wird. Da der feuchte Aktivkoks bzw. die feuchte Aktivkohle in Verbindung mit Wasser ein relativ gutes Fließverhalten hat, kann der auszutauschende Teil des Filtermaterials nach dem Fluten, durch am Boden vorgesehene Öffnungen, insbesondere Ventile, abgelassen werden. Wenn bei der erfindungsgemäßen Verfahrensweise auch der Einzugsbereich der Gase - in der Nähe des Bodenbereichs innerhalb der Filtermaterialschüttung - gereinigt werden soll, kann auch dieser Bereich mit Wasser geflutet werden. Der Abtransport des verbrauchten Filtermaterials kann nach dem Fluten und Schlämmen über hydraulische Leitungen erfolgen. Wenn erfindungsgemäß von Wasser zum Fluten und Befeuchten die Rede ist, wird damit jede Flüssigkeit gemeint, die in diesem Zusammenhang Einsatz finden kann.

Werden brennbare Schüttgüter, also beispielsweise die genannten Materialien wie Aktivkohle oder -koks, zum Filtrieren verwendet, läßt sich der Brandschutz durch einfache Berieselung der Filterschicht mit Wasser gewährleisten. Aufwendige Schritte, die herkömmlich - zum Schutz von hot spots - bei trockenen erhitzten Filtern erforderlich waren, wie die Inertisierung des Filters mit Stickstoff, sind nicht notwendig. Durch die inhärente Sicherheit des Filters sind Meßmethoden, wie die genannte CO-Vergleichsmessung zum Detektieren von Erwärmungen des Filters nicht notwendig.

Anhand der schematischen Darstellung eines Ausführungsbeispiel werden Einzelheiten der Erfindung erläutert. Es zeigen:
- **Fig. 1**: einen Querschnitt durch eine Filterzelle mit nassem Aktivkoksfilter;
- **Fig. 2**: einen Schnitt längs der Linie II-II von Fig. 1; und
- **Fig. 3**: eine Draufsicht auf ein Filtermodul mit mehreren quaderförmigen Filterzellen.

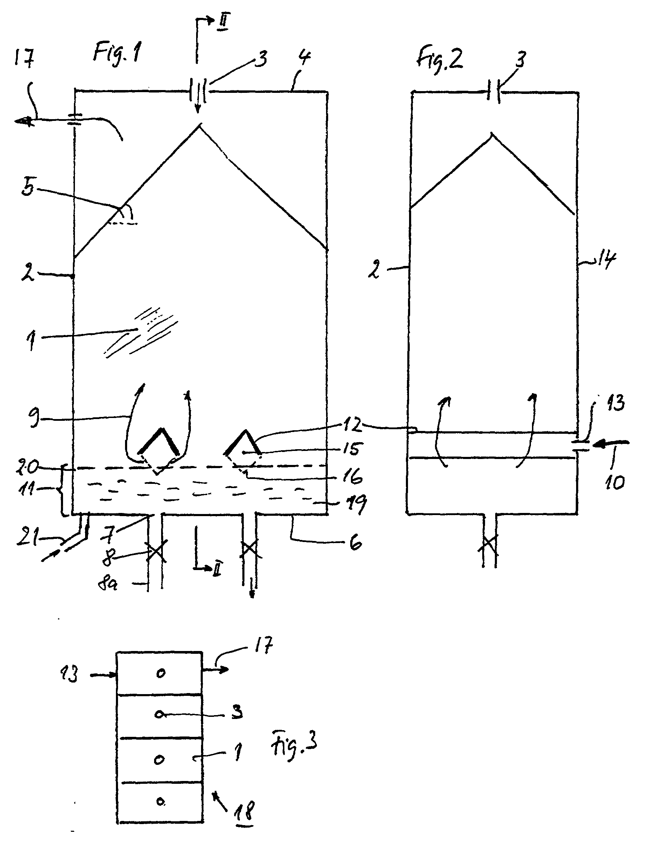

Das Ausführungsbeispiel gemäß Fig. 1 bis 3 betrifft ein als Festbettreaktor ausgebildetes nasses Aktivkoksfilter 1 in einer im wesentlichen quaderförmigen Filterzelle 2. Das Material des Filters 1 wird über einen Einlaß 3 in der Decke 4 der Filterzelle 2 eingeführt. Je nach Art der Körnung des Filtermaterials bildet sich ein bestimmter Schüttwinkel 5 auf der Oberseite des Filters 1. Im Boden 6 der Filterzelle 2 werden Auslässe 7 mit Ventilen 8 und eventuell mit anschließenden Abflußleitungen 8a vorgesehen. Zum Einleiten des zu reinigenden Gases 9 in der gezeichneten Einlaßrichtung 10 werden nahe dem Bodenbereich 11 des Filters 1 dachförmige Leitungen 12 jeweils mit einer Verbindung zu einem Gaseinlaß 13 und einer Seitenwand 14 der Zelle 2 vorgesehen. Unterhalb der dachförmigen Leitungen 12 entsteht ein für das Gas offener Durchgang 15, dessen Unterseite 16 beim Schütten des Filtermaterials von selbst entsteht. Das eingelassene Gas 9 strömt in der dargestellten Pfeilrichtung von unten nach oben durch das Aktivkoksfilter 1. Die zu durchströmende Schicht kann in der Größenordnung von 1,5 m liegen. Die ganze Höhe der Filterzelle 2 mit Einlaßteilen oberhalb der Decke 4 und Ablaßteilen unterhalb des Bodens 6 kann in der Größenordnung von 10 m liegen.

Das zu reinigende Gas 9 fließt, wie gesagt, von unten nach oben durch das Aktivkohlefilter 1, es strömt schließlich oberhalb des Filterbereichs durch einen Auslaß 17 aus der Filterzelle 2 aus. Fig. 3 zeigt die Draufsicht (Blick auf die Decke 4) mehrerer nebeneinander stehender und zu einem Modul 18 vereinigten Filterzellen 2. Auf der jeweiligen Decke ist der Einlaß 3 angedeutet. Der Gaseinlaß 13 befindet sich in Fig. 3 auf der linken Seite (unten), der Gasauslaß 17 befindet sich auf der rechten Seite (oben).

Wenn ein im Bodenbereich 11 befindlicher Teil verbrauchten Filtermaterials 19 aus der Filterzelle 2 entnommen werden soll, kann das Innere der Filterzelle 2 bis zu einer entsprechenden Marke 20 mit Wasser geflutet werden. Der durch das Aufschlämmen mit Wasser entstehende Kohleschlamm kann dann über die Auslässe 7 und nach Öffnen der Ventile 8 wie eine Flüssigkeit durch Leitungen 8a abgelassen werden. Zum Fluten des Bodenbereichs 11 kann an der Filterzelle 2 ein Wassereinlaß 21 vorgesehen werden.

### Bezugszeichenliste

- 1 =: Aktivkohlefilter
- 2 =: Filterzelle
- 3 =: Einlaß
- 4 =: Decke (2)
- 5 =: Schüttwinkel
- 6 =: Boden (2)
- 7 =: Auslaß
- 8 =: Ventil
- 9 =: Gas
- 10 =: Einlaßrichtung
- 11 =: Bodenbereich
- 12 =: Leitung
- 13 =: Gaseinlaß
- 14 =: Seitenwand
- 15 =: Durchgang
- 16 =: Unterkante (15)
- 17 =: Gasauslaß
- 18 =: Modul
- 19 =: verbrauchtes Filtermaterial
- 20 =: Flutmarke
- 21 =: Wassereinlaß

## Patentansprüche

1. Verfahren zum Reinigen von Gasen (9) aus industriellen Prozessen, wie Rauchgas aus Verbrennungsanlagen oder Kraftwerken, insbesondere zum Abscheiden von Dioxin, mit einem Aktivkohle bzw. -koks als Filtermaterial (1) in einer Filterzelle (2) enthaltenden Festbettfilter (1), wobei das Festbettfilter (1) in feuchtem Zustand betrieben wird, **dadurch gekennzeichnet,** daß die Gase (9) vor dem Einleiten in das Filter (1) durch einen Naßwäscher geführt werden, so daß in den zu reinigenden Gasen enthaltende Stäube mit Zementierungseigenschaft durch Berührung mit Wasser ausreagiert werden, und daß die Gase (9), ohne über den Taupunkt erhitzt zu sein, durch das Festbettfilter (1) geleitet werden.

2. Verfahren nach Anspruch 1, **dadurch gekennzeichnet,** daß das Festbettfilter (1) in der Nähe des Taupunkts betrieben wird.

3. Verfahren nach Anspruch 1 oder 2, **dadurch gekennzeichnet,** daß verbrauchtes Filtermaterial mit Hilfe von Wasser aus der Filterzelle (2) ausgespült bzw. ausgeschlämmt wird.

4. Verfahren nach Anspruch 3, **dadurch gekennzeichnet,** daß eine Filterzelle (2), in deren Bodenbereich (11) Öffnungen (7) zum Abzug des verbrauchten Filtermaterials vorgesehen sind und aus der verbrauchtes Filtermaterial abgezogen werden soll, bis zu einer Höhe (20) über dem Zellenboden (6) mit Wasser geflutet wird.

5. Verfahren nach mindestens einem der Ansprüche 1 bis 4, **dadurch gekennzeichnet,** daß bei einer Filterzelle (2), der frisches Filtermaterial von oben zugeführt wird und in der das zu reinigende Gas (9) im Gegenstrom von unten nach oben durch das Filtermaterial geleitet wird, auch der Einzugsbereich (12, 15) des Gases (9) nahe dem Bodenbereich (11) der Filterzelle für Instandhaltungszwecke mit Wasser geflutet wird.

6. Verfahren nach mindestens einem der Ansprüche 1 bis 5, **dadurch gekennzeichnet,** daß ein Brand innerhalb des Filters (1) durch Wasserzufuhr, insbesondere durch Fluten der ganzen Filterzelle (2), gelöscht wird.

7. Verfahren nach mindestens einem der Ansprüche 1 bis 6, **dadurch gekennzeichnet,** daß die einzelne Filterzelle (2) durch Anheben des Wasserstandes im Filtermaterial vom vorgeschalteten Naßwäscher getrennt wird.

8. Vorrichtung zum Durchführen des Verfahrens nach mindestens einem der Ansprüche 1 bis 7, **dadurch gekennzeichnet,** daß die einzelne Filterzelle (2) im wesentlichen quaderförmig ausgebildet ist und daß dem im wesentlichen ebenen Boden (6) des Filters (1) Ventile (8) zum Ablassen von aufgeschlämmtem Filtermaterial zugeordnet sind.

9. Vorrichtung nach Anspruch 8, **dadurch gekennzeichnet,** daß der Filterzelle (2) Mittel zum Fluten des Zellenvolumens von ihrer Unterseite her zugeordnet sind.

## Claims

1. Process for purifying gases (9) from industrial processes, such as flue gas from combustion plants or power stations, in particular for separating dioxin, with an activated charcoal or coke as filter material (1) in a fixed bed filter (1) containing a filtration cell (2), the fixed bed filter (1) being operated in the moist state, characterised in that the gases (9) are passed through a wet washer prior to introduction into the filter (1), so dust particles with cementation property contained in the gases to be purified are reacted by contact with water, and in that the gases (9) are passed through the fixed bed filter (1) without being heated above the dew point.

2. Process according to claim 1, characterised in that the fixed bed filter (1) is operated around the dew point.

3. Process according to claim 1 or 2, characterised in that expended filter material is flushed or washed out of the filtration cell (2) with the aid of water.

4. Process according to claim 3, characterised in that a filtration cell (2), in the base region (11) of which apertures (7) are provided for discharging the expended filter material and from which the expended filter material is to be withdrawn, is flooded with water up to a level (20) above the cell base (6).

5. Process according to at least one of claims 1 to 4, characterised in that in a filtration cell (2), which is supplied with fresh filter material from above and in which the gas to be purified (9) is passed upwards through the filter material in counter-current, the intake region (12, 15) of the gas (9) is also flooded with water in the vicinity of the base region (11) of the filtration cell for maintenance purposes.

6. Process according to at least one of claims 1 to 5, characterised in that a fire inside the filter (1) is extinguished by supplying water, in particular by flooding the entire filtration cell (2).

7. Process according to at least one of claims 1 to 6, characterised in that the single filtration cell (2) is separated from the wet washer connected upstream by raising the water level in the filter material.

8. Device for carrying out the process according to at least one of claims 1 to 7, characterised in that the single filtration cell (2) is substantially right parallelepiped in design and in that valves (8) for removing washed filter material are associated with the substantially plane base (6) of the filter (1).

9. Device according to claim 8, characterised in that means for flooding the cell volume from its bottom side are associated with the filtration cell (2).

## Revendications

1. Procédé pour la purification de gaz (9) provenant de processus industriels, tels que le gaz de combustion d'installations de combustion ou de centrales électriques, en particulier pour la séparation de la dioxine, comportant un filtre de lit fixe (1) contenant du charbon ou du coke actif en tant que matière de filtrage (1) contenue dans une cellule de filtrage (2), procédé dans lequel le filtre de lit fixe (1) est mis en oeuvre à l'état humide, caractérisé en ce que, avant leur introduction dans le filtre (1), les gaz (9) sont conduits à travers un laveur de gaz par voie humide de telle manière que les poussières contenues dans les gaz à purifier réagissent avec une caractéristique de cémentation par contact avec de l'eau et en ce que les gaz (9) sont conduits à travers le filtre de lit fixe (1) sans être chauffés au-dessus du point de rosée.

2. Procédé selon la revendication 1, caractérisé en ce que le filtre de lit fixe (1) est mis en oeuvre au voisinage du point de rosée.

3. Procédé selon la revendication 1 ou 2, caractérisé en ce que la matière de filtrage usagée est extraite de la cellule de filtrage (2) par rinçage ou lavage à l'aide de l'eau.

4. Procédé selon la revendication 3, caractérisé en ce qu'une cellule de filtrage (2), dans la zone de fond (11) de laquelle on prévoit des ouvertures (7) pour l'extraction de la matière de filtrage usagée et de laquelle on extrait la matière de filtrage usagée, est noyée par de l'eau jusqu'à une hauteur (20) qui est au-dessus du fond de la cellule (6).

5. Procédé selon au moins l'une quelconque des revendications 1 à 4, caractérisé en ce que, dans le cas d'une cellule de filtrage (2), à laquelle on envoie de la matière de filtrage fraîche nouvelle par le haut et dans laquelle le gaz à purifier (9) est conduit à travers la matière de filtrage à contre-courant du bas vers le haut, la zone d'introduction (12, 15) du gaz (9) est également noyée avec de l'eau, à proximité de la zone de fond (11) de la cellule de filtrage (2), en vue d'une opération de maintenance.

6. Procédé selon l'une quelconque des revendications 1 à 5, caractérisé en ce que l'on éteint un incendie se produisant à l'intérieur du filtre (1) par envoi d'eau, en particulier en noyant l'ensemble de la cellule de filtrage (2).

7. Procédé selon au moins l'une quelconque des revendications 1 à 6, caractérisé en ce que la cellule de filtrage individuelle (2) est séparée en élevant le niveau de l'eau du laveur de gaz par voie humide disposé en amont.

8. Dispositif pour la mise en oeuvre du procédé selon au moins l'une quelconque des revendications 1 à 7, caractérisé en ce que la cellule de filtrage individuelle (2) a une forme essentiellement parallélipipédique et en ce que l'on adjoint, au fond (6) sensiblement plat du filtre (1), des valves (8) pour l'extraction de la matière de filtrage lavée.

9. Dispositif selon la revendication 8, caractérisé en ce que l'on adjoint, à la cellule de filtrage (2), des moyens pour noyer le volume intérieur de la cellule à partir de sa face inférieure.
